# EUROPEAN PATENT APPLICATION

(11) **EP 2 423 807 A2**
(43) Date of publication of application: **29.02.2012**
(21) Application number: 11179418.6
(22) Date of filing: 30.08.2011
(51) Int. Cl.: G06F 3/16

(54) **Method and apparatus to process audio signal**

(30) Priority: 30.08.2010 KR 20100084188
(71) Applicant: Samsung Electronics Co., Ltd, Gyeonggi-do (KR)
(72) Inventor: Yoo, Soo-hyun, Incheon (KR); Kim, Jeong-seok, Seoul (KR)
(74) Representative: Walaski, Jan Filip

(57) **Abstract**

A signal processing method of coupling with a plurality of audio output devices and allocating a plurality of audio sources to the plurality of audio output devices is disclosed.

## Description

The present invention generally relates to a method and apparatus of processing an audio signal, and more particularly, to an audio signal processing method and apparatus of allocating audio sources to a plurality of audio output devices.

According to the development of technology, various types of audio output devices, such as an audio device, a Moving Pictures Experts Group Audio Layer 3 (MP3) player, a personal computer (PC), and a smart phone, can decode and reproduce an audio signal.

Further, with the recent development of technology, a user terminal such as the PC can execute more than one application simultaneously. For example, a user can execute a media player and simultaneously execute a game by using the user terminal. That is, the user can activate and run a plurality of audio applications using one user terminal. In this case, upon activation of the plurality of audio applications, respective audio signals are reproduced corresponding to the activated audio applications.

Conventionally, all of the audio signals reproduced by the plurality of audio applications are output to only one default audio output device. That is, even if a plurality of audio output devices are connected to the user terminal, all audio signals from their respective audio applications are reproduced through the default audio output device, so the usage of the plurality of audio output devices is limited. Therefore, it is desired to improve approaches to utilize the audio signals reproduced by the respective audio applications with audio output devices.

The present invention provides an audio signal processing method and apparatus to allocate audio sources to a plurality of audio output devices.

Additional features and utilities of the present invention will be set forth in part in the description which follows and, in part, will be obvious from the description, or may be learned by practice of the present invention.

According to an aspect of the present invention, there is provided a signal processing method including coupling with a plurality of audio output devices, and allocating a plurality of audio sources to the plurality of audio output devices.

The signal processing method may further include generating and managing information regarding the allocation details of the plurality of audio output devices.

The allocating may include allocating different audio sources to different audio output devices.

The allocating may include randomly allocating the plurality of audio sources to the plurality of audio output devices.

The allocating may include allocating an audio source, for which an execution instruction has been provided, to an audio output device having a higher priority.

The priorities may be allocated to the plurality of audio output devices based on a coupling order.

The priorities may be set by a user.

The priorities may be set to default.

The allocating may include outputting a device allocation setup User Interface (UI), selecting an audio source and an audio output device in the device allocation setup UI, and allocating the selected audio source to the selected audio output device.

The device allocation setup UI may include an icon indicating an audio output device.

The selecting of the audio source and the audio output device may include selecting one icon, and placing the icon on an application window through a drag and drop process for the icon.

The allocating of the selected audio source to the selected audio output device may include allocating an audio source executed in the application window on which the icon is placed to an audio output device indicated by the icon.

The selecting of the audio source and the audio output device may include: selecting one application window, and placing the application window on one icon through a drag and drop process for the application window.

The allocating of the selected audio source to the selected audio output device may include allocating an audio source executed in the selected application window to an audio output device indicated by the icon.

The device allocation setup UI may include one of a list box and a combo box for displaying the plurality of audio output devices and the plurality of audio sources.

The selecting of the audio source and the audio output device may include selecting one audio output device and one audio source from the list box or the combo box.

According to another aspect of the present invention, there is provided a user terminal including an audio output processing unit, which is coupled with a plurality of audio output devices and allocates a plurality of audio sources to the plurality of audio output devices.

According to another aspect of the present invention, there is provided a computer readable recording medium storing a computer readable program to execute a signal processing method including: coupling with a plurality of audio output devices, and allocating a plurality of audio sources to the plurality of audio output devices.

The above and/or other utilities and features of the present invention will become apparent and more readily appreciated from the following description of the exemplary embodiments, taken in conjunction with the accompanying drawings, in which:
FIG. 1 is a block diagram of a user terminal according to an exemplary embodiment of the present invention;
FIG. 2 is a block diagram of an audio output processing unit shown in FIG. 1;
FIGS. 3 illustrates a display unit displaying an executing application and a device allocation setup UI according to an exemplary embodiment of the present invention;
FIGS. 4A and 4B illustrate device allocation setup UIs according to exemplary embodiments of the present invention;
FIG. 5 is a flowchart of a signal processing method according to an exemplary embodiment of the present invention;
FIG. 6 is a flowchart of operation 520 shown in FIG. 5 according to an exemplary embodiment of the present invention; and
FIG. 7 is a flowchart of operation 520 shown in FIG. 5 according to another exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

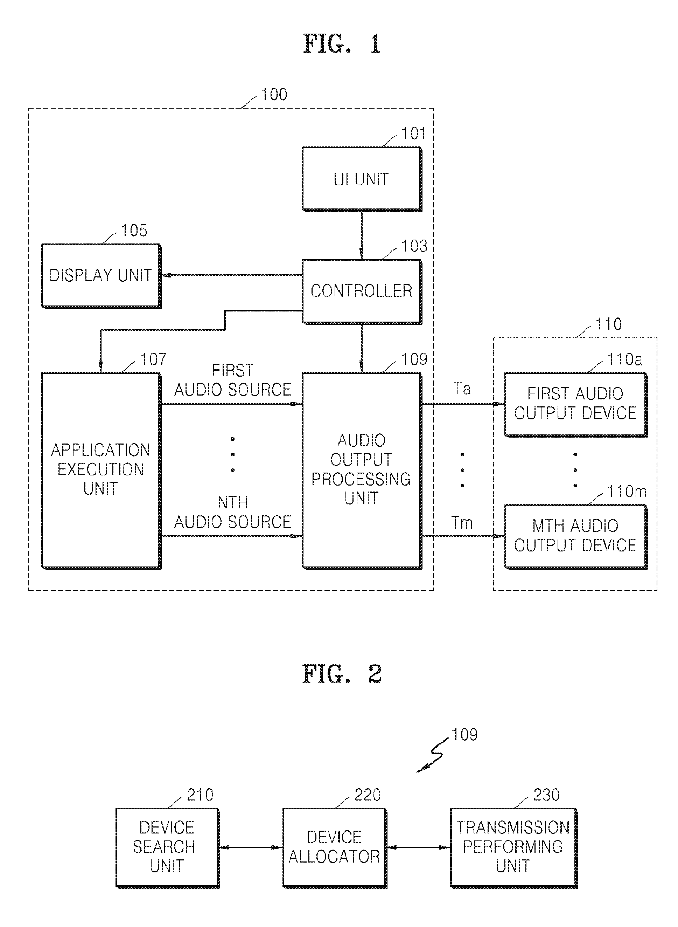

FIG. 1 is a block diagram of a user terminal 100 according to an exemplary embodiment of the present invention.

Referring to FIG. 1, the user terminal 100 is connected to a plurality of audio output devices 110. The user terminal 100 can be coupled with a plurality of output devices, such as a first audio output device 110a to an M^{th} audio output device 110m (M is a natural number equal to or greater than 2) via an input/output interface, such as a Universal Serial Bus (USB) or Institute of Electrical and Electronic Engineers (IEEE) 1394.

The audio output devices 110 including the first audio output device 110a to the M^{th} audio output device 110m are coupled with terminals Ta to Tm of the user terminal 100. The audio output devices 110 receive an electrical signal from the user terminal 100, and then process and output the electrical signal. An audio output device may be a speaker or a stereo system or a Digital Television (DTV), or a PC or a smart phone, and may be separate from the user terminal 100.

The number of the terminals may be the same as the number of the audio output devices. For example, each of the audio output devices including the first audio output device 110a to the M^{th} audio output device 110m may be coupled with corresponding terminals Ta to Tm of the user terminal 100. Furthermore, it is possible that the number of the terminals Ta to Tm may be different from the number of the audio output devices 110. For example, when the number of the terminals is greater than the number of the audio output devices, that is, when the terminals include Ta to Tm and the audio output devices include 110a to 110e, the terminals Ta to Te may be coupled with corresponding audio output devices 110a to 110e and the terminals Tf to Tm may not be coupled with the audio output devices.

The audio output processing unit 109 may detect connections between the terminals Ta to Tm of the user terminal 100 and the audio output devices 110 including the first audio output device 110a to the M^{th} audio output device 110m. For example, the connection may be provided via a serial connection, a parallel connection, a plug and play (PnP) connection or a universal serial bus (USB) connection that enables detection of the audio output devices.

The audio output device may include a codec (not shown) to convert a digital signal received from the user terminal 100 to an analog signal, and may also include an amplifier (not shown) to adjust a signal output volume.

The user terminal 100 may be a machine to perform operations or to process calculations or data by executing a program. The user terminal 100 may be a computer such as a PC or a laptop, a Personal Digital Assistant (PDA), a Personal Media Player (PMP), a cellular phone, or a smart phone. Further, the user terminal 100 can include a User Interface (UI) unit 101, a controller 103, a display unit 105, an application execution unit 107, and an audio output processing unit 109.

The UI unit 101 provides interfaces with a user such that the user can interact with the user terminal 100. The UI unit 101 may be a physical transducer, such as a keyboard, a mouse, a touch pad, a touch screen, or a microphone. The UI unit 101 receives instructions, characters, numbers, or voice information input from the user and sends the information to the controller 103.

By way of an example, the user can select desired information by using the UI unit 101 and may move a position of the selected information in a drag and drop manner. As another example, the user can select an application or an option by using the UI unit 101 to execute the selected application or the option.

The controller 103 controls a general operation of the user terminal 100 so that a plurality of audio sources are allocated to a plurality of audio output devices (e.g. the audio output devices 110), respectively, according to an exemplary embodiment of the present invention. The controller 103 may include an Arithmetic Logic Unit (ALU) to perform calculations and registrations to temporarily store data and instructions.

The display unit 105 displays a general status of the user terminal 100 or information input by the user through the UI unit 101. For example, the display unit 105 may display applications that are currently running, audio output devices available for use, an operation status, and etc.

The display unit 105 can also generate and output an On Screen Display (OSD) to be displayed to the user, such that the OSD is displayed as a super-imposed image over an image on a screen of the display unit 105. In the current embodiment, the display unit 105 can also generate and output a device allocation setup UI.

The device allocation setup UI can include a UI to enable the user to select which algorithm is used, in order to allocate an audio source to an audio output device 110. The user can select a desired algorithm among various device allocation algorithms through the device allocation setup UI output by the display unit 105.

The device allocation setup UI may include a UI by which the user can directly select an audio source and an audio output device. That is, the display unit 105 can generate and output the device allocation setup UI to enable the user to directly select an audio output device among a plurality of audio output devices 110 in order to allocate the selected audio output device to an audio source.

The display unit 105 can generate the device allocation setup UI in which at least one of the plurality of audio output devices 110 and at least one of audio sources are displayed in a form of a list box or a combo box, or displayed as image information, such as an emoticon, an icon, a flash icon, or picture information. The user can directly select an audio source and an audio output device through the device allocation setup UI.

The application execution unit 107 is configured to execute applications and may be able to execute more than one application. Then, more than one application may be executed and run simultaneously. In the current embodiment, an application is a program using an audio source and may be a media player, a game, a web browser, or any other applications that can output audio signals. The application can be stored in the user terminal 100 by being read from a storage medium such as a disc (not shown) inserted in the user terminal 100 or by being downloaded from an external server (not shown) through a communication network. Also, all or a part of the application can also be executed remotely from the external server or another external device.

Once the application execution unit 107 executes an application, more than one process is activated. At this time, each of the processes may include identifiable process information, e.g., a process identifier (ID).

One application may execute one audio source or execute a plurality of audio sources at the same time. One application executes a plurality of audio sources, for example, when each of a plurality of media file windows executes an audio source. When one application executes a plurality of audio sources, processes to respectively execute the audio sources may include identifiable process information.

In the current embodiment, the user terminal 100 can identify audio sources delivered from different processes by managing process information of an application.

The application execution unit 107 transmits a plurality of audio sources (e.g., a first audio source to an N^{th} audio source, wherein N is a natural number equal to or greater than 2) to the audio output processing unit 109 by executing a plurality of applications. The audio sources may include any type of data that can be used to play an audio, such as a music file, a video file, and etc.

The audio output processing unit 109 receives the plurality of audio sources from the application execution unit 107 and allocates the plurality of audio sources to the plurality of output devices 110 including the first audio output device 110a to the M^{th} audio output device 110m. The audio output processing unit 109 can transmit an audio source to an allocated audio output device. In the current embodiment, the audio output processing unit 109 can allocate different audio sources to different audio output devices, respectively.

The audio output processing unit 109 can allocate an audio source to an audio output device using various methods.

In the current embodiment, the audio output processing unit 109 can directly select an audio source and an audio output device selected by the user and can allocate the selected audio source to the selected audio output device 110.

The device allocation setup UI output from the display unit 105 may enable the user to recognize audio sources for which an application is executed and audio output devices 110 coupled with the user terminal 100. The user may also view the device allocation setup UI and then may directly select an audio source and an audio output device by using the UI unit 101.

In this case, the controller 103 informs the audio output processing unit 109 of the audio source and the audio output device selected by the user, and the audio output processing unit 109 allocates the audio source selected by the user to the audio output device selected by the user.

According to another embodiment of the present invention, the audio output processing unit 109 can automatically allocate audio sources to the audio output devices 110 randomly. In addition, the audio output processing unit 107 may automatically allocate the audio sources to the audio output devices 110 that are set as default with respect to the audio sources.

According to another embodiment of the present invention, when the application execution unit 107 executes a plurality of audio sources, the audio output processing unit 109 can allocate audio sources to the audio output devices 110 according to priorities of the audio output devices 110. In one example, the audio output processing unit 109 can allocate an audio source to an audio output device having a higher priority in an order of an audio source for which an application is executed from among the plurality of audio sources. Thus, in this example, the first audio source may be allocated to an audio output device having the highest priority and the N^{th} audio source may be allocated to an audio output device having the lowest priority.

The priority can be allocated to each of the plurality of audio output devices 110. By way of an example, the audio output processing unit 109 can allocate priorities to the plurality of audio output devices 110 including the first audio output device 110a to the M^{th} audio output device 110m according to the order of the plurality of audio output devices 110 coupled with terminals Ta to Tm of the user terminal 100. For example, the first audio output device 110a may have the highest priority and the M^{th} audio output device 110m may have the lowest priority.

Alternatively, the priorities can be allocated to a plurality of interfaces used to couple the terminal 100 with the plurality of audio output devices 110 as default, the plurality of interfaces being included in the user terminal 100. In this case, a priority allocated to an interface can be allocated to an audio output device coupled with the interface used to couple with the terminal 100.

Alternatively, the priority may be set by the user for each audio output device through the UI unit 101. In this case, a user interface may be provided to enable a user to use the UI unit 101 to enter a value for a priority for each of the audio output devices 110.

As described above, according to an exemplary embodiment of the present invention, when the plurality of audio output devices 110 are coupled with the user terminal 100, the user terminal 100 can allocate a plurality of audio sources to the plurality of audio output devices 110 so that the plurality of audio output devices 110 can output audio signals of the plurality of audio sources at the same time, thereby expanding the usage of the user terminal 100.

FIG. 2 is a block diagram of the audio output processing unit 109 shown in FIG. 1, according to an embodiment of the present invention. Referring to FIG. 2, the audio output processing unit 109 includes a device search unit 210, a device allocator 220, and a transmission performing unit 230.

The device search unit 210 confirms information regarding the audio output devices 110 coupled with the user terminal 100. By way of an example, the device search unit 210 can confirm the audio output devices 110 currently coupled with the user terminal 100 by using Plug and Play (PnP) information regarding coupling/decoupling of audio output devices 110, and generate a list showing the currently coupled audio output devices 110 based on the PnP information. Other approaches such as an approach using USB information or other similar approaches may also be used to recognize the currently coupled audio output devices 110.

The device search unit 210 transmits the list of the audio output devices 110 to the device allocator 220 automatically or in response to a request of the device allocator 220.

The device allocator 220 allocates an audio source to an audio output device according to an exemplary embodiment of the present invention. The device allocator 220 receives a plurality of audio sources from the application execution unit 107. As discussed above, when the application execution unit 107 executes an application, a process is activated to deliver a corresponding audio source. The device allocator 220 can identify an audio source delivered by the process by using process information of an application, which delivers the audio source.

The device allocator 220 receives a list of the audio output devices 110 from the device search unit 210 and identifies the audio output devices 110 coupled with the user terminal 100. The device allocator 220 can select one of the audio output devices 110 in various methods, several of which are explained below.

The user can select one device allocation operation through the device allocation setup UI by using the UI unit 101. In this case, the user may use the UI unit 101 to enter a selection for the device allocation operation via the device allocation setup UI.

The device allocator 220 can select an audio output device according to an algorithm. The algorithm may be selected by a user or may be automatically set. Also, the device allocator 220 can select one of the audio output devices 110 randomly or select an audio output device having the highest priority by using priorities allocated to the plurality of audio output devices 110. Alternatively, the device allocator 220 can select an audio source and an audio output device selected by the user.

The device allocator 220 allocates an audio source to the audio output device selected by the device allocator 220. Thus, the device allocator 220 allocates a plurality of audio sources to selected audio output devices, respectively.

The device allocator 220 can generate, maintain, and manage information regarding audio output device allocation details indicating an audio output device where an audio source is allocated.

The transmission performing unit 230 transmits an audio source to the audio output device designated by the device allocator 220. Thus, when one of the audio output devices 110 is allocated for the audio source by the device allocator 220, then the transmission performing unit 230 transmits the audio source to the allocated one of the audio output devices 110.

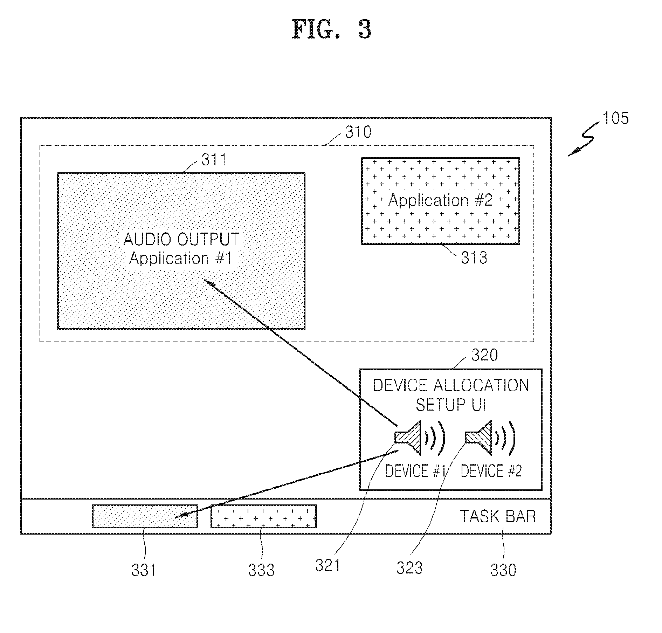

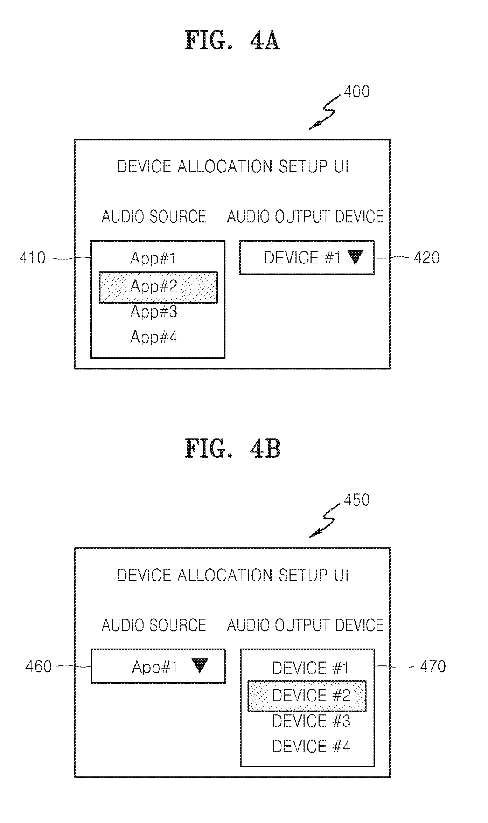

FIG. 3 illustrates a display unit displaying an executing application and a device allocation setup UI according to an exemplary embodiment of the present invention, and FIGS. 4A and 4B illustrate device allocation setup UIs according to an exemplary embodiment of the present invention. The device allocation setup UIs shown in FIGS. 3 and 4 are UIs for a user to directly select an audio source and an audio output device.

Referring to FIG. 3, an executing application 310 is displayed on the display unit 105 (e.g. a display screen) of the user terminal 100. The currently executing application 310 is displayed with two application windows 311 and 313 in FIG. 3. By way of an example, the application windows 311 and 313 may appear on the display unit 105 when application #1 and application #2 are selected to be executed, respectively.

Since one audio source per application window can be executed according to this example, the two application windows 311 and 313 indicate that two audio sources corresponding to the application windows 311 and 313 respectively are executed.

In a device allocation setup UI 320, audio output devices currently coupled with the user terminal 100 are marked with icons 321 and 323. The names of the audio output devices coupled with the user terminal 100 may be displayed under icons 321 and 323. In this case, the name of the audio output device corresponding to icon 321 is DEVICE #1 and the name of the audio output device corresponding to icon 323 is DEVICE #2. By way of an example, the device allocation setup UI 320 may appear on the display unit 105 automatically when an application for an audio source, such as the application #1 and application #2, is executed. By way of another example, the device allocation setup UI 320 may automatically appear on the display unit when the audio output devices are coupled with the user terminal 100. By way of another example, the device allocation setup UI 320 may appear on the display unit 105 when an option for the device allocation setup is manually selected.

The user can select an icon indicating a desired audio output device from among the icons 321 and 323 displayed in the device allocation setup UI 320. For example, the user can select the icon by dragging and dropping the icon 321 to the application window 311 or to a corresponding position of a task bar (e.g. the taskbar icon 331 corresponding to the application window 331), in order to execute the desired audio source. In this example, the audio source executed by the application window 311 utilizes DEVICE #1 as the audio output device, as icon 321 is selected for application window 311.

FIG. 3 also illustrates that there may be a taskbar 330 to display a summary of applications that are currently open. The taskbar icon 331 corresponding to the application #1 window 311 is displayed at the taskbar 330 to show that application #1 is currently running. Also, the taskbar icon 333 corresponding to the application #2 window 313 is displayed at the taskbar 330 to show that application #2 is currently running. The taskbar icons 331 and 333 may automatically appear on the task bar 330 when application #1 and application #2 are executed.

The controller 103 (of FIG. 1) checks locations (e.g. coordinates) on the display screen of the display unit 105 to which an icon is dragged and dropped and informs the audio output processing unit 109 of an audio source executed by an audio application corresponding to the locations. For example, the controller 103 recognizes the coordinates that are covered by the application window 311, and if the icon 321 is dragged and dropped to the coordinates covered by the application window 311, then the controller 103 informs the audio output processing unit 109 of the audio source that DEVICE #1 is assigned. The audio output processing unit 109 (of FIG. 1) provides an audio source selected by the user to an audio output device corresponding to an icon selected by the user.

According to another exemplary embodiment of the present invention, the user may select an audio source and an audio output device to which the audio source is allocated by dragging and dropping the application window 311 to execute the desired audio source on an icon indicating the desired audio output device from among the icons 321 and 323 displayed in the device allocation setup UI 320 by using the UI unit 101. For example, if the user desires to use DEVICE #1 for the audio source executed by application #1, then the user may drag and drop the application window 311 at the icon 321.

FIGS. 4A and 4B illustrate the device allocation setup UIs in which audio sources and audio output devices are displayed in a combo box or a list box, according to exemplary embodiments of the present invention. By way of an example, the device allocation setup UI may be selected to be opened, and is then displayed on the display unit 105. By way of an example, the device allocation setup UI may initially be displayed in a window such as the device allocation setup UI 320 of FIG. 3. Then, in order to display the device allocation setup UI on an entire screen, the device allocation setup UI may be double clicked or an option for maximizing the device allocation setup UI to take the entire screen may be selected.

According to an exemplary embodiment of the present invention, applications to execute audio sources can be displayed using a combo box, and audio output devices can be displayed using a list box. According to another exemplary embodiment of the present invention, applications to execute audio sources can be displayed using a list box, and audio output devices can be displayed using a combo box. Alternatively, both applications to execute audio sources and audio output devices may be displayed using a combo box or a list box.

In particular, FIG. 4A illustrates an exemplary embodiment for the device allocation setup UI 400 where applications to execute audio sources are displayed using the list box 410, and audio output devices are displayed using the combo box 420. The user can select an audio source executed in a selected application by selecting one of the applications displayed in the list box 410 using the UI unit 101. The user can also check a list of a plurality of audio output devices coupled with the user terminal 100 by clicking an arrow of the combo box 420 using the UI unit 101. The user can select one audio output device from the list. Then, the selected audio output device may be used for the selected application executing the respective audio source.

Further, FIG. 4B illustrates an exemplary embodiment for the device allocation setup UI 450 where applications to execute audio sources are displayed using the combo box 460, and audio output devices are displayed using the list box 470. In this embodiment, the user can check a list of the applications executing respective audio sources by clicking an arrow of the combo box 460 using the UI unit 101, and then select one application executing one audio source from the list. The user can also select an audio output device by selecting one of the audio output devices displayed in the list box 470 using the UI unit 101. Then, the selected audio output device may be used for the selected application executing the respective audio source.

Referring back to FIG. 1, the controller 103 informs the audio output processing unit 109 of information regarding the audio source and the audio output device selected by the user, and the audio output processing unit 109 provides the audio source selected by the user to the audio output device corresponding to the icon selected by the user.

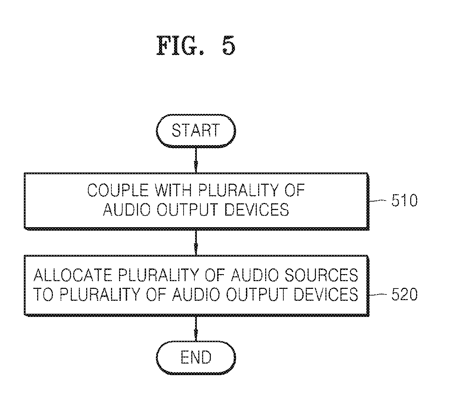

FIG. 5 is a flowchart of a signal processing method according to an exemplary embodiment of the present invention.

Referring to FIG. 5, the user terminal 100 is coupled with the plurality of audio output devices 110 through an interface, in operation 510. Then, the user terminal 100 allocates a plurality of audio sources to the plurality of audio output devices 110 using various methods, in operation 520.

The user terminal 100 can select an audio source and an audio output device and allocate the selected audio source to the selected audio output device, wherein the audio source and/or the audio output device may be selected by the user. Alternatively, the user terminal 100 can randomly allocate an audio source to an audio output device, which may not involve user selection. Alternatively, the user terminal 100 can allocate priority to audio output devices coupled with the user terminal 100 and allocate audio sources according to the priority.

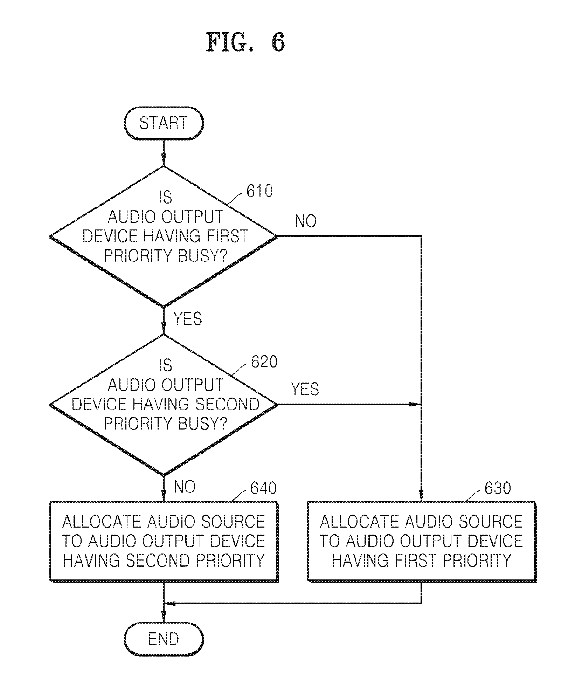

FIG. 6 is a flowchart of operation 520 of FIG. 5, according to one exemplary embodiment of the present invention. In FIG. 6, the user terminal 100 uses priority information allocated to audio output devices to select an audio output device. The user terminal 100 searches for an audio output device having a first priority, which is the highest priority, from among a plurality of audio output devices coupled with the user terminal 100. The user terminal 100 determines in operation 610 whether the audio output device having a first priority is busy. For example, the audio output device having the first priority may be considered busy if it is being used.

If the audio output device having the first priority is not busy, the user terminal 100 allocates an audio source to the audio output device having the first priority, in operation 630.

Otherwise, if the audio output device having the first priority is busy, the user terminal 100 determines in operation 620 whether an audio output device having a second priority is busy. For example, the audio output device having the second priority may be considered busy if it is being used. The second priority may be the second highest priority after the first priority. If the audio output device having the second priority is not busy, the user terminal 100 allocates the audio source to the audio output device having the second priority, in operation 640. Otherwise, if the audio output device having a second priority is busy and if there is no more audio output devices coupled with the user terminal 100, the user terminal 100 can allocate the audio source to the audio output device having the first priority, in operation 630.

After allocating the audio source to an audio output device, the user terminal 100 can generate and manage information regarding the allocation details.

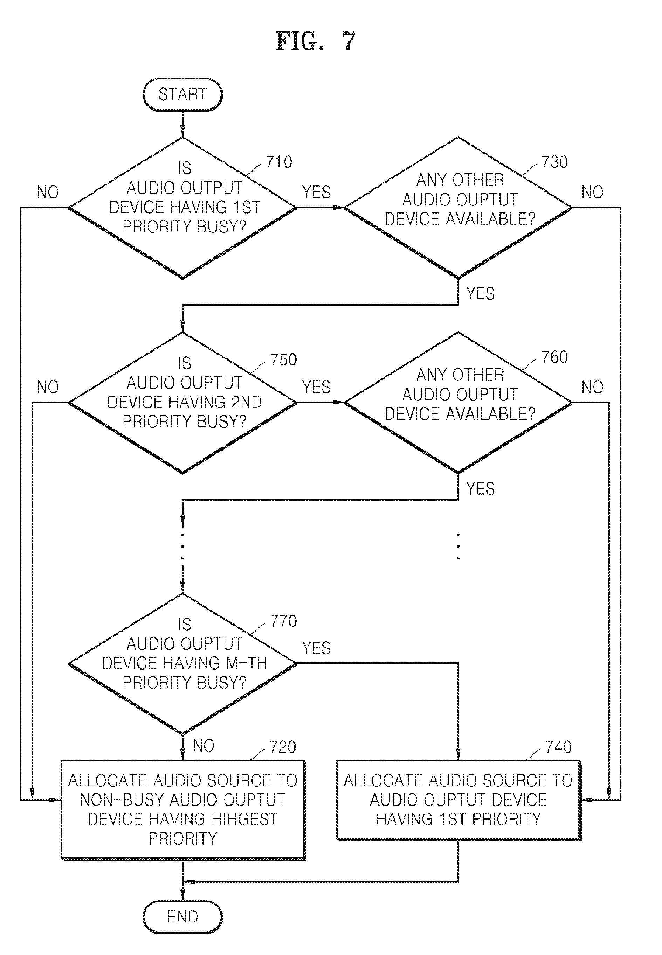

FIG. 7 is a flowchart of operation 520 of FIG. 5, according to another exemplary embodiment of the present invention. In FIG. 7, the user terminal 100 uses priority information allocated to audio output devices to select an audio output device, wherein the number of audio output devices is M. Thus, the audio output devices may include the audio output device having the first priority to the audio output device having the M^{th} priority. In this embodiment, priority becomes lower as it goes from the first priority to the M^{th} priority. Therefore, the first priority is the highest priority, the second priority is the second highest priority, and the M^{th} priority is the lowest priority.

The user terminal 100 initially searches to locate an audio output device having a first priority from among audio output devices coupled with the user terminal 100. Then, in operation 710, the user terminal 100 determines whether the audio output device having the first priority is busy. If the audio output device having the first priority is not busy, the user terminal 100 allocates the audio source to a non-busy audio output device having the highest priority, in operation 720. In this case, the non-busy audio output device having the highest priority is the audio output device having the first priority. On the contrary, if the audio output device having the first priority is busy, the user terminal 100 determines whether any other audio output device coupled with the user terminal 100 is available, in operation 730. If there is no other audio output device available, the user terminal 100 allocates the audio source to the audio output device having the first priority, in operation 740. If there is at least one other audio source available, the user terminal 100 searches to locate an audio output device having a second priority among the audio output devices coupled with the user terminal 100. Then, the user terminal 100 determines whether the audio output device having the second priority is busy, in operation 750. If the audio output device having the second priority is not busy, the user terminal 100 allocates the audio source to a non-busy audio output device having the highest priority, in operation 720. In this case, the non-busy audio output device having the highest priority is the audio output device having the second priority because the audio output device having the first priority is busy. On the contrary, if the audio output device having the second priority is busy, the user terminal 100 determines whether any other audio output device coupled with the user terminal 100 is available, in operation 760. If there is no other audio source available, the user terminal 100 allocates the audio source to the audio output device having the first priority, in operation 740. If there is at least one other audio source available, the user terminal 100 searches for an audio output device having a third priority among the audio output devices coupled with the user terminal 100.

These steps are repeated until the audio output device having the M^{th} priority is reached. In operation 770, the user terminal 100 determines whether the audio output device having the M^{th} priority is busy. If the audio output device having the M^{th} priority is busy, then the user terminal 100 allocates the audio source to the audio output device having the first priority, in operation 740. Otherwise, the user terminal 100 allocates the audio source to a non-busy audio output device having the highest priority, which is the audio output device having the M^{th} priority in this case.

The process illustrated in FIG.7 may be repeated for different audio sources. For example, the process of FIG. 7 may be performed for the first audio source first, and then may be performed for the second audio source, and so on. After allocating the audio sources to the respective audio output devices, the user terminal 100 can generate and manage information regarding the allocation details.

While this invention has been particularly shown and described with reference to preferred embodiments thereof, it will be understood by those skilled in the art that various changes in form and details may be made therein without departing from the scope of the invention as defined by the appended claims. The embodiments should be considered in descriptive sense only and not for purposes of limitation.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

## Claims

1. A signal processing method comprising:
coupling a terminal with a plurality of audio output devices; and
allocating a plurality of audio sources generated by the terminal to the plurality of audio output devices.

2. The signal processing method of claim 1, further comprising generating and managing information regarding allocation details of the plurality of audio output devices.

3. The signal processing method of claim 1 or claim 2, wherein the allocating comprises allocating different audio sources to different audio output devices.

4. The signal processing method of claim 3,
wherein the allocating comprises allocating an audio source, for which an execution instruction has been provided, to an audio output device having a higher priority, and
wherein priorities for the plurality of audio output devices are allocated to the plurality of audio output devices based on a coupling order.

5. The signal processing method of claim 4, wherein priorities for the plurality of audio output devices are set by a user.

6. The signal processing method of claim 4, wherein priorities for the plurality of audio output devices are set to default.

7. The signal processing method of any one of claims 1 to 3, wherein the allocating comprises:
outputting a device allocation setup user interface (UI);
selecting an audio source and an audio output device in the device allocation setup UI; and
allocating the selected audio source to the selected audio output device.

8. The signal processing method of claim 7,
wherein the device allocation setup UI comprises an icon indicating an audio output device, and
wherein the selecting of the audio source and the audio output device comprises:
selecting one icon; and
placing the icon on an application window through a drag and drop process for the icon.

9. The signal processing method of claim 8, wherein the allocating of the selected audio source to the selected audio output device comprises allocating an audio source executed in the application window on which the icon is placed to an audio output device indicated by the icon.

10. The signal processing method of claim 7,
wherein the device allocation setup UI comprises an icon indicating an audio output device,
wherein the selecting of the audio source and the audio output device comprises:
selecting one application window; and
placing the application window on one icon through a drag and drop process for the application window, and
wherein the allocating of the selected audio source to the selected audio output device comprises allocating an audio source executed in the selected application window to an audio output device indicated by the icon.

11. The signal processing method of claim 9,
wherein the device allocation setup UI comprises at least one of a list box and a combo box to display the plurality of audio output devices and the plurality of audio sources, and
wherein the selecting of the audio source and the audio output device comprises selecting one audio output device and one audio source from the list box or the combo box.

12. A user terminal comprising an audio output processing unit, which is coupled with a plurality of audio output devices and allocates a plurality of audio sources to the plurality of audio output devices.

13. The user terminal of claim 12, further comprising:
a display unit to output a device allocation setup User Interface (UI); and
a UI unit to select an audio source and an audio output device in the device allocation setup UI,
wherein the audio output processing unit allocates the selected audio source to the selected audio output device.

14. A computer readable recording medium storing a computer readable program to execute a signal processing method comprising:
coupling with a plurality of audio output devices; and
allocating a plurality of audio sources to the plurality of audio output devices.

15. A user terminal to process an audio signal, comprising:
a plurality of terminals; and
an audio output processing unit to allocate a plurality of audio sources to respective terminals.
